# EUROPÄISCHE PATENTSCHRIFT

(11) **EP 2 536 543 B1**
(45) Veröffentlichungstag und Bekanntmachung des Hinweises auf die Patenterteilung: **10.08.2016**
(21) Anmeldenummer: 11709890.5
(22) Anmeldetag: 16.02.2011
(51) Int. Cl.: B27N 3/00, B27N 3/04, B27N 3/06, C08L 97/02, D21C 5/00, D21J 1/00, D21J 1/20

(54) **DÄMMSTOFFE UND VERFAHREN ZU DEREN HERSTELLUNG**
INSULATING MATERIAL AND METHOD FOR PRODUCING THE SAME
MATÉRIAUX ISOLANTS ET PROCÉDÉ DE PRODUCTION

(30) Priorität: 18.02.2010 DE 102010008525
(43) Veröffentlichungstag der Anmeldung: 26.12.2012
(73) Patentinhaber: Georg-August-Universität Göttingen Stiftung Öffentlichen Rechts, 37073 Göttingen (DE)
(72) Erfinder: KHARAZIPOUR, Alireza, 37079 Göttingen (DE); EURING, Markus, 37077 Göttingen (DE)
(74) Vertreter: Michalski Hüttermann & Partner Patentanwälte mbB
(86) Internationale Anmeldenummer: PCT/EP2011/052316
(87) Internationale Veröffentlichungsnummer: WO 2011/101390

(56) Entgegenhaltungen:
- EP-A1- 1 908 876
- EP-A2- 1 331 307
- EP-A2- 2 000 508
- WO-A2-2010/020409
- DE-A1- 4 305 411
- US-B1- 6 610 172

## Beschreibung

Die vorliegende Erfindung bezieht sich auf das Gebiet der Dämmstoffe, insbesondere von Dämmplatten, die aus Holz hergestellt sind sowie deren Herstellung und Verwendung. Es werden enzymatische Nassverfahren und enzymatische Trockenverfahren zur Herstellung von Dämmstoffen beschrieben, bei denen eine Inkubationslösung wie eingesetzt wird.

Holzfaserdämmplatten sind wertvolle Werkstoffe, die aus einem nachwachsenden Rohstoff, nämlich lignocellulosehaltigen Stoffen wie Holz hergestellt werden können. Diese Holzwerkstoffe werden in mannigfachen Verarbeitungszweigen für Wärme- und Schalldämmzwecke und als zusätzliche, wasserabweisende Beplankungen verwendet. Der hauptsächliche Anwendungsbereich ist im Hochbau.

Bestehende Verfahren zur Herstellung derartiger Dämmstoffe bzw. Platten beinhalten zumeist den Einsatz von Bindemitteln, insbesondere formaldehydhaltiger oder diisocyanathaltiger Bindemittel. Alternative Verfahren sind zwar grundsätzlich bekannt (z.B. aus der DE 4305411) jedoch sind diese Verfahren häufig technisch aufwendig, insbesondere zeitaufwendig und konnten bisher nicht erfolgreich im großtechnischen Maßstab eingesetzt werden.

Daher stellt sich die Aufgabe, die aus heutigem Stand bekannten Verfahren und Produkte noch weiter zu verbessern und deren Nachteile zumindest teilweise zu überwinden.

Diese Aufgabe wird durch ein Verfahren Anspruch 1 gelöst. Die in nachfolgend aufgeführten allgemeinen, bevorzugten und besonders bevorzugten Ausführungsformen, Definitionen und Alternativen können beliebig miteinander kombiniert werden und sind Gegenstand der vorliegenden Erfindung. Des Weiteren können einzelne Definitionen / Alternativen entfallen.

Demgemäß wird ein Verfahren zur Herstellung von lignocellulosehaltigen Dämmstoffen bereitgestellt, umfassend die Schritte:
a) Bereitstellung eines lignocellulosehaltingen Vorläufermaterials;
b) Versetzen dieses Vorläufermaterials mit einer Inkubationslösung, enthaltend mindestens einen Mediator und mindestens ein phenoloxidierendes Enzym bei einem pH von ≤ 8, bevorzugt bei einem pH von ≤ 6;
c) sofortige mechanische und/oder thermomechanische Verformung;
d) gegenbenenfalls sofortige Konfektionierung.
und wobei der Mediator ein Material lt Struktur I enthält bzw. daraus besteht: 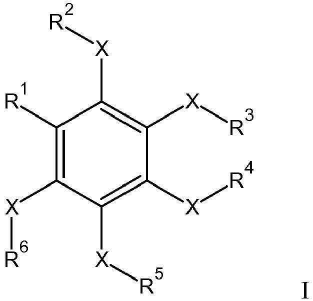 wobei
R¹ ausgewählt ist aus Hydroxyl (-OH) und Thiol (-SH);
jedes X unabhängig voneinander ausgewählt ist aus der Gruppe enthaltend Einfachbindung, - CR'R"-, -CR'=CR"-, wobei R' und R" unabhängig voneinander ausgewählt sind aus der Gruppe enthaltend Wasserstoff, Alkyl, Aryl, Cycloalkyl,
   sowie
R² bis R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-, -NH-,-NR°-, -SiR°R°°-, -CO-, -COO-, -OCO-, -OCO-O-, -SO₂-, -S-CO-, -CO-S-, -CY¹=CY² oder-C≡C- ersetzt sein können und zwar derart, dass O und/oder S Atome nicht direkt miteinander verbunden sind (endständige CH₃-Gruppen werden wie CH₂-Gruppen im Sinne von CH₂-H verstanden),
und wobei mindestens ein Rest R² bis R⁶ ausgewählt ist aus der Gruppe Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon.

Der Begriff "Dämmstoffe" im Sinne der vorliegenden Erfindung bedeutet dabei ein Material mit einer Dichte von ≤ 400 kg/m³, insbesondere ein Material mit einer Dichte zwischen 80 und 280 kg/m³. Im Rahmen der vorliegenden Erfindung sind Dämmplatten, insbesondere Holzweichfaserplatten, bevorzugte Ausführungsformen der genannten Dämmstoffe.

Unter dem Begriff "Mediator" werden insbesondere niedermolekulare Substanzen verstanden, die als Katalysator wirken. Alternativ bzw. ergänzend werden unter dem Begriff "Mediator" insbesondere niedermolekulare Substanzen verstanden, welche in der Lage sind, mit phenoloxidierenden Enzymen in gewünschter synergistischer Weise zusammenzuwirken. Bevorzugte Mediatoren werden nachstehend beschrieben.

Gemäß des erfindungsgemäßen Verfahrens wird Schritt b), bevorzugt aber auch Schritt a) und/oder c) bei einem pH von ≤ 8, bevorzugt ≤ 6 durchgeführt. Der pH kann dabei über einen Puffer eingestellt werden, bevorzugte Puffersysteme sind Mc-Ilvaine-Puffer, Natrium-AcetatPuffer.

Der Term "sofortig" bedeutet und/oder umfasst dabei eine Inkubationszeit von <30 min, bevorzugt <20 min, noch bevorzugt <10 min. Gemäß einer bevorzugten Ausführungsform der Erfindung wird Schritt b) ohne Inkubationszeit durchgeführt.

Dabei wird der Term "Inkubationszeit" so verstanden, dass nach dem Aufbringen des Enzym-Mediator-Gemisches noch eine gewisse Zeit (= die Inkubationszeit) abgewartet wird, die unabhängig ist vom sonstigen Ablauf des Herstellungsprozesses. Ist keine Inkubationszeit vorhanden oder notwendig, wird Schritt b) somit ohne Verzögerung, die nicht auf die sonstige konkrete Anwendung zurückzuführen wäre, nach Schritt a) durchgeführt.

Unter dem Begriff "mechanische und/oder thermomechanische Verformung" werden insbesondere die im herkömmlichen Nass - oder Trockenverfahren eingesetzten Schritte verstanden, die das Vorläufermaterial in die gewünschte Form (z.B. Platten) überführen.

Überraschend hat sich herausgestellt, dass die Verwendung eines derartigen erfindungsgemäßen Materials bei der Herstellung von Dämmstoffen von Vorteil ist. Insbesondere bietet das Verfahren gemäß der vorliegenden Erfindung bei den meisten Anwendungen einen oder mehrere der folgenden Vorteile:
- Die Herstellung der Dämmstoffe ist auf schnellere und einfachere Weise möglich
- formaldehydhaltige Bindemittel können weitestgehend ausgeschlossen, teilweise sogar ganz vermieden werden.
- Beim erfindungsgemäßen Verfahren sind meist keine weiteren Oxidationsmittel (wie Fe²⁺/H₂O₂ o. ä.) notwendig.
- Die Reaktion des Enzym-Mediator-Systems kann sowohl im Nass- als auch beim Trockenverfahren ohne zusätzliche Temperierung erfolgen. Die Reaktionen finden bei Raumtemperatur statt.
- Das Enzym-Mediator-System kann nach dem "einstufigen Prinzip" direkt mit den Fasern versetzt werden (Nassverfahren) oder direkt aufgetragen werden (z. B. Besprühen im Trockenverfahren). Somit entfällt jegliche Vorbehandlung des Enzym-Mediator-Systems und der Fasern.
- Bei der Herstellung, bei der weiteren Verarbeitung und dem anschließenden Gebrauch entstehen keine schädlichen Emissionen.
- Das erfindungsgemäße Material bildet keine toxischen Abbauprodukte, so dass der Einsatz unbedenklich ist
- So hergestellte Produkte können problemlos recycelt werden.
- Die Rohstoffe sind dauerhaft verfügbar.
- Das Produkt ist unabhängig vom steigenden Rohölpreis herzustellen.
- Ein Verkauf von gesundheitlich unbedenklichen, formaldehydfreien Produkte finden eine breite Akzeptanz bei den Konsumenten.

### Vorteilhafte Ausgestaltungen des Verfahrens

Nachfolgend seien die einzelnen Begriffe und Verfahrensschritte des erfindungsgemässen Verfahrens erläutert

Gemäß einer bevorzugten Ausführungsform der Erfindung wird mindestens einer der Schritte a) b) c) und d) kontinuierlich durchgeführt ("teilkontinuierliches Verfahren"); bevorzugt werden alle Schritte a), b) c) und d) kontinuierlich durchgeführt ("vollkontinuierliches Verfahrens").

Gemäß einer Ausführungsform der Erfindung werden die Dämmstoffe mittels eines modifizierten Naßverfahrens ("enzymatisches Nassverfahren") hergestellt. Darunter wird insbesondere verstanden, daß in Schritt a) und/oder b) zumindest zeitweilig die Holzfasern in Wasser aufgeschlämmt werden.

Bevorzugt werden dabei ≥2% bis ≤8% (Gew/Gew)-Suspensionen verwendet, noch bevorzugt ≥3% bis ≤4%.

Bevorzugt umfaßt das Verfahren dann mindestens einen Entwässerungsschritt, wobei hier eine Entwässerung auf Langsieb (z.B. mittels Schwerkraft, Vakuum, Keilpressen / Rollenpressen) bevorzugt ist. Noch bevorzugt umfaßt das Verfahren mindestens einen Trocknungsschritt, der auf den Entwässerungsschritt folgt. Bevorzugt sind Ofen und/oder Mikrowellentrocknung.

Gemäß einer alternativen Ausführungsform der Erfindung werden die Dämmstoffe mittels eines modifizierten Trockenverfahrens ("enzymatisches Trockenverfahren") hergestellt. Unter dem Begriff "Trockenverfahren" wird insbesondere verstanden, daß die Holzfasern nach der Zerfaserung nicht aufgeschlämmt werden. In dieser Ausführungsform wird in Schritt b) die Inkubationslösung auf das Vorläufermaterial gesprüht; typischerweise direkt nach der Blowline. Daran anschliessend kann ein Trocknungsschritt erfolgen.

### Schritt a)

Der Begriff "Vorläufermaterial" ist allgemein bekannt, es werden darunter insbesondere die im herkömmlichen Nass - oder Trockenverfahren eingesetzten Materialien (also (Holz)fasern im Trockenverfahren oder eine Aufschlämmung von (Holz)fasern im Nassverfahren) verstanden.

Gemäß einer Ausführungsform der Erfindung ("enzymatisches Trockenverfahren") umfaßt das Vorläufermaterial Holzfasern, wobei bevorzugt das Vorläufermaterial zu >95 Gew-%, noch bevorzugt >99-Gew% aus Holzfasern besteht.

Gemäß einer alternativen Ausführungsform der Erfindung ("enzymatisches Nassverfahren") umfaßt das Vorläufermaterial Holzfasern, wobei bevorzugt das Vorläufermaterial zu > 95-Gew-%, noch bevorzugt >98-Gew% aus Holzfasern besteht

### Holzfasern:

Zur Herstellung von Dämmstoffen werden vor allem Nadelhölzer eingesetzt. Fichte und Tanne sind dabei bevorzugte Holzarten, gelegentlich kommen auch Föhre oder Lärche zum Einsatz. Die wesentlichen Vorteile von Nadelhölzern sind hohe Verfügbarkeit und eine Faserqualität, die den fertigen Platten im Verhältnis zur Rohdichte eine hohe Festigkeit verleihen. Als Rohstoffsortimente werden vor allem sägefrische Resthölzer aus Sägereien in Form von Schwarten und Spreisseln sowie Hackschnitzeln verwendet. Schwarten und Spreissel werden im Werk zu Hackschnitzeln weiterverarbeitet. Die Trockensubstanz in diesem Stadium liegt bevorzugt bei maximal 65 Gew%.

Der Ausdruck "Holzfasern" ist allgemein bekannt; bevorzugt sind TMP-Fasern (TMP = Thermomechanical Pulp Process) . Geeignete Holzfasern haben bevorzugt eine mittlere Länge von ≥1 mm bis ≤20 mm, noch bevorzugt ≥2 mm bis ≤10 mm. Diese Faserlängen haben sich in der Praxis besonders bewährt, wobei höhere Längen leichtere Produkte ergeben, kürzere Längen schwerere.

Die Dicke der Holzfasern beträgt bevorzugt ≥0.1 mm bis ≤1 mm. Die Dicke der Faserbünden wird durch den eingestellten Mahlabstand bestimmt; leichtere Dämmplatten werden typischerweise mit gröberen Fasern hergestellt als schwerere. Geeignete Holzfasern können nach an sich bekannten Verfahren hergestellt werden; bevorzugt durch Aufschluß bei mehreren bar Überdruck, bevorzugt ≥4 bis ≤8 bar aus geeignetem Holz (bevorzugt sind insbesondere Fichte, Tanne, Kiefer, Lärche, sowie europ. Laubhölzer wie Buche, Eiche) gewonnen.

In einer Ausführungsform werden die Hackschnitzel unter Einwirkung von Wasserdampf bei einem Druck von ≥3 bis ≤8 bar aufgeweicht und so für die nachfolgende Zerfaserung vorbereitet. Im Defibrationsverfahren erfolgt dies zwischen profilierten Mahlscheiben aus Metall. Den spezifischen Anforderungen der verschiedenen Produkte entsprechend können die Fasern anschliessend auf einem Raffinator einer Nachmahlung unterzogen werden.

### Schritt b)

Das Vorläufermaterial kann auf an sich bekannte Art mit der Inkubationslösung versetzt werden; bspw indem die Inkubationslösung auf das Voräufermaterial gesprüht wird (besonders geeignet im enzymatischen Trockenverfahren) oder indem sie in eine Aufschlämmung des Voräufermaterials gegeben wird (im enzymatischen Nassverfahren).

### Schritt c)

Unter dem Begriff "mechanische und/oder thermomechanische Verformung" werden insbesondere die im herkömmlichen Nass - oder Trockenverfahren eingesetzten Schritte verstanden, die das Vorläufermaterial in die gewünschte Form (z.B. Platten) überführen.

Im Falle des enzymatischen Nassverfahrens kann ein geschlossener Wasserkreislauf mit angeschlossener Klärung vorgesehen werden. Durch diese Massnahmen wird bei vielen Anwendungen der Frischwasserverbrauch deutlich gesenkt.

### Schritt d)

Die hergestellten Dämmstoffe (insbesondere Dämmplatten) können bspw. in einem Konfektionierungsschritt auf Format geschnitten werden. Ferner können solche Dämmstoffe (insbesondere Dämmplatten) in einem Konfektionierungsschritt mit Nut und Kamm / Feder versehen werden, bspw. mittels eines Doppelendprofilers.

Ferner können solche Dämmstoffe (insbesondere Dämmplatten) in einem Konfektionierungsschritt zu mehrlagigen Dämmelementen verklebt werden. Als Klebstoff ist bspw. Weissleim geeignet. Ein solcher Verklebungsschritt ist vor allem bei der Herstellung von Dämmstoffen (insbesondere Dämmplatten) nach dem Nassverfahren vorteilhaft, da die primär hergestellten Dämmstoffe (insbesondere Dämmplatten) typischerweise eine Dicke von ca. 8 bis 30 mm aufweisen.

Allgemeine Gruppendefinition: Innerhalb der Beschreibung und den Ansprüchen werden allgemeine Gruppen, wie z. B.: Alkyl, Alkoxy, Aryl etc. beansprucht und beschrieben. Wenn nicht anders beschrieben, werden bevorzugt die folgenden Gruppen innerhalb der allgemein beschriebenen Gruppen im Rahmen der vorliegenden Erfindung verwendet:
alkyl: lineare und verzweigte C1-C8-Alkyle,
langkettige Alkyle: lineare und verzweigte C5-C20 Alkyle
alkenyl: C2-C8-alkenyl,
cycloalkyl: C3-C8-cycloalkyl,
Alkoxy: C1-C6-alkoxy,
langkettig Alkoxy: lineare und verzweigte C5-C20 Alkoxy
alkylene: ausgewählt aus der Gruppe enthaltend:
   methylene; 1,1-ethylene; 1,2-ethylene; 1,1-propylidene; 1,2-propylene; 1,3- propylene; 2,2-propylidene; butan-2-ol-1,4-diyl; propan-2-ol-1,3-diyl; 1, 4-butylene; cyclohexane-1,1-diyl; cyclohexan-1,2-diyl; cyclohexan-1,3- diyl; cyclohexan-1,4-diyl; cyclopentane-1,1-diyl; cyclopentan-1,2-diyl; und cyclopentan-1,3-diyl,
aryl: ausgewählt aus Aromaten mit einem Molekulargewicht unter 300 Da.
arylene: ausgewählt aus der Gruppe enthaltend: 1,2-phenylene; 1,3- phenylene; 1,4-phenylene; 1,2-naphtalenylene; 1,3-naphtalenylene; 1,4- naphtalenylene; 2,3-naphtalenylene; 1-hydroxy-2,3-phenylene; 1-hydroxy-2,4- phenylene; 1-hydroxy-2,5- phenylene; und 1-hydroxy-2,6-phenylene,
Carboxyderivate: der Rest -COXR₁, wobei X NH oder O darstellt und R₁ ausgewählt ist aus der Gruppe enthaltend Alkyl, Aryl, Cycloalkyl, Heteroaryl, Heterocycloalkyl.
heteroaryl: ausgewählt aus der Gruppe enthaltend: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; thiophenyl; carbazolyl; indolyl; und isoindolyl, wobei das Heteroaryl mit der Verbindung über jedes Atom im Ring des ausgewählten Heteroaryls verbunden sein kann.
heteroarylene: ausgewählt aus der Gruppe enthaltend: pyridindiyl; quinolindiyl; pyrazodiyl; pyrazoldiyl; triazolediyl; pyrazindiyl, thiophendiyl; und imidazolediyl, wobei das heteroarylene als Brücke in der Verbindung über ein beliebiges Atom im Ring des ausgewählten Heteroaryls fungiert, speziell bevorzugt sind: pyridin-2, 3-diyl; pyridin-2,4-diyl; pyridin-2,5-diyl; pyridin-2,6-diyl; pyridin-3,4- diyl; pyridin-3,5-diyl; quinolin-2,3-diyl; quinolin-2,4-diyl; quinolin-2, 8-diyl; isoquinolin-1,3-diyl; isoquinolin-1,4-diyl; pyrazol-1,3-diyl; pyrazol-3,5- diyl; triazole-3,5-diyl; triazole-1,3-diyl; pyrazin-2,5-diyl; und imidazole-2,4-diyl, thiophen-2,5-diyl, thiophen-3,5-diyl; ein -C1-C6-heterocycloalkyl, ausgewählt aus der Gruppe enthaltend: piperidinyl; piperidine; 1,4-piperazine, tetrahydrothiophene; tetrahydrofuran; 1,4,7-triazacyclononane; 1,4,8,11- tetraazacyclotetradecane; 1,4,7,10,13-pentaazacyclopentadecane; 1,4-diaza- 7-thia-cyclononane; 1,4- diaza-7-oxa-cyclononane; 1,4,7,10-tetraazacyclododecane; 1,4-dioxane; 1,4, 7-trithia-cyclononane; pyrrolidine; und tetrahydropyran, wobei das Heteroaryl mit dem C1-C6-Alkyl über jedes Atom im Ring des ausgewählten Heteroaryls verbunden sein kann.
heterocycloalkylene: ausgewählt aus der Gruppe enthaltend: piperidin-1,2- ylene; piperidin-2,6-ylene; piperidin-4,4-ylidene; 1,4-piperazin-1,4-ylene; 1,4-piperazin-2,3-ylene; 1,4-piperazin-2,5-ylene; 1,4-piperazin-2,6-ylene; 1,4-piperazin- 1,2-ylene; 1,4-piperazin-1,3-ylene; 1,4-piperazin-1,4-ylene; tetrahydrothiophen-2,5-ylene; tetrahydrothiophen-3,4-ylene; tetrahydrothiophen-2,3-ylene; tetrahydrofuran-2,5-ylene; tetrahydrofuran- 3,4-ylene; tetrahydrofuran-2,3-ylene; pyrrolidin-2,5-ylene; pyrrolidin-3,4-ylene; pyrrolidin-2,3-ylene; pyrrolidin-1,2-ylene; pyrrolidin-1,3-ylene; pyrrolidin-2,2-ylidene; 1,4,7-triazacyclonon-1,4-ylene; 1,4,7- triazacyclonon-2,3-ylene; 1,4,7-triazacyclonon-2,9-ylene; 1,4,7-triazacyclonon-3,8-ylene; 1,4,7-triazacyclonon-2,2- ylidene; 1,4,8,11-tetraazacyclotetradec-1,4-ylene; 1,4,8,11- tetraazacyclotetradec-1,8-ylene; 1,4,8,11-tetraazacyclotetradec-2,3-ylene; 1,4,8,11-tetraazacyclotetradec-2,5-ylene; 1,4,8,11- tetraazacyclotetradec-1,2-ylene; 1,4,8,11-tetraazacyclotetradec-2,2-ylidene; 1,4,7,10-tetraazacyclododec-1,4-ylene; 1,4,7,10-tetraazacyclododec-1,7-ylene; 1,4,7,10-tetraazacyclododec-1,2- ylene; 1,4,7,10-tetraazacyclododec-2,3- ylene; 1,4,7,10-tetraazacyclododec-2,2-ylidene; 1,4,7,10,13 pentaazacyclopentadec-1,4-ylene; 1,4,7,10,13- pentaazacyclopentadec-1,7-ylene; 1,4,7,10,13-pentaazacyclopentadec-2,3- ylene; 1,4,7,10,13-pentaazacyclopentadec-1,2-ylene; 1,4,7,10, 13-pentaazacyclopentadec-2,2-ylidene; 1,4-diaza-7-thia-cyclonon- 1,4-ylene; 1,4-diaza-7-thia-cyclonon-1,2-ylene; 1,4-diaza-7thia-cyclonon- 2,3-ylene; 1,4-diaza-7-thia-cyclonon-6,8-ylene; 1,4-diaza-7-thia-cyclonon- 2,2-ylidene; 1,4-diaza-7-oxacyclonon-1,4-ylene; 1,4-diaza-7-oxa-cyclonon- 1,2-ylene; 1,4diaza-7-oxa-cyclonon-2,3-ylene, 1,4-diaza-7-oxa-cyclonon-6, 8-ylene; 1,4-diaza-7-oxa-cyclonon-2,2-ylidene; 1,4-dioxan-2,3-ylene; 1,4- dioxan-2,6-ylene; 1,4-dioxan-2,2-ylidene; tetrahydropyran-2,3-ylene; tetrahydropyran-2,6-ylene; tetrahydropyran-2,5-ylene; tetrahydropyran-2,2- ylidene; 1,4,7-trithia-cyclonon-2,3-ylene; 1,4,7-trithia-cyclonon-2,9- ylene; und 1,4,7-trithia-cyclonon-2,2-ylidene,
heterocycloalkyl: ausgewählt aus der Gruppe enthaltend: pyrrolinyl; pyrrolidinyl; morpholinyl; piperidinyl; piperazinyl; hexamethylene imine; 1,4-piperazinyl; tetrahydrothiophenyl; tetrahydrofuranyl; 1,4,7- triazacyclononanyl; 1,4,8,11-tetraazacyclotetradecanyl; 1,4,7,10,13- pentaazacyclopentadecanyl; 1,4-diaza-7-thiacyclononanyl; 1,4-diaza-7-oxa- cyclononanyl; 1,4,7,10-tetraazacyclododecanyl; 1,4-dioxanyl; 1,4,7- trithiacyclononanyl; tetrahydropyranyl; und oxazolidinyl, wobei das Heterocycloalkyl mit der Verbindung über jedes Atom im Ring des ausgewählten Heterocycloalkyls verbunden sein kann.
halogen: ausgewählt aus der Gruppe enthaltend: F; Cl; Br und I,
halogenalkyl: ausgewählt aus der Gruppe enthaltend mono, di, tri-, poly und perhalogenated lineare und verzweigte C1-C8-alkyl
pseudohalogen: ausgewählt aus der Gruppe enthaltend -CN, -SCN, -OCN, N3, -CNO, -SeCN

Soweit nicht anders erwähnt, sind die folgenden Gruppen mehr bevorzugte Gruppen innerhalb der allgemeinen Gruppendefinition:
alkyl: lineare und verzweigte C1-C6-alkyl, noch bevorzugt Methyl und Ethyl
langkettige Alkyle: lineare und verzweigte C5-C10 alkyl, vorzugsweise C6-C8 alkyle
alkenyl: C3-C6-alkenyl,
cycloalkyl: C6-C8-cycloalkyl,
Alkoxy: Cl-C4-alkoxy, noch bevorzugt Methoxy und Ethoxy
langkettig Alkoxy: lineare und verzweigte C5-C10 alkoxy, vorzugsweise lineare C6-C8 alkoxy
Alkylen: ausgewählt aus der Gruppe enthaltend: Methylene; 1,2-ethylene; 1,3-propylene; butan-2-ol-1,4-diyl; 1,4-butylene; cyclohexane-1,1-diyl; cyclohexan-1,2-diyl; cyclohexan-1,4-diyl; cyclopentane-1,1-diyl; und cyclopentan-1,2-diyl,
Aryl: ausgewählt aus der Gruppe enthaltend: phenyl; biphenyl; naphthalenyl; anthracenyl; und phenanthrenyl,
Arylen: ausgewählt aus der Gruppe enthaltend: 1,2-phenylene; 1,3- phenylene; 1,4-phenylene; 1,2-naphtalenylene; 1,4-naphtalenylene; 2,3- naphtalenylene und 1-hydroxy-2,6-phenylene,
Heteroarylen: Thiophen, Pyrrol, Pyridin, Pyridazin, Pyrimidin, Indol, Thienothiophen
Halogen: ausgewählt aus der Gruppe enthaltend: Br und Cl, besonders bevorzugt Br

Gemäß einer bevorzugten Ausuhrungsform enthält der Mediator mindestens ein Material mit der folgenden Struktur 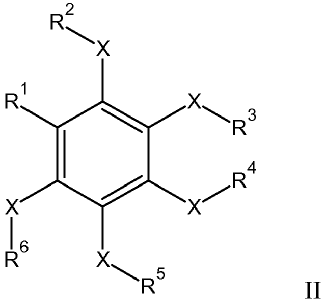 wobei
R¹ ausgewählt ist aus Hydroxyl (-OH) und Thiol (-SH);
R⁴ ausgewählt ist aus der Gruppe enthaltend Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon;
jedes X unabhängig voneinander ausgewählt ist aus der Gruppe enthaltend Einfachbindung, - CR'R"-, -CR'=CR"-, wobei R' und R" unabhängig voneinander ausgewählt sind aus der Gruppe enthaltend Wasserstoff, Alkyl, Aryl, Cycloalkyl,
   sowie
R² , R³ R⁵ und R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-, -NH-,-NR°-, -SiR°R°°-, -CO-, -COO-, -OCO-, -OCO-O-, -SO₂-, -S-CO-, -CO-S-, -CY¹=CY² oder-C≡C- ersetzt sein können und zwar derart, dass O und/oder S Atome nicht direkt miteinander verbunden sind (endständige CH₃-Gruppen werden wie CH₂-Gruppen im Sinne von CH₂-H verstanden).

Diese Materialien haben sich in der Praxis häufig besonders bewährt. Ohne darauf beschränkt zu sein, wird dies darauf zurückgeführt, dass hier die Hydroxy/Thiol-Funktion in 4- Stellung zu einer aktivierenden Gruppe ist.

Gemäß einer bevorzugten Ausführungsform der Erfindung enthält der Mediator keinen Stickstoff. Dies hat sich als vorteilhaft herausgestellt, da so auf einfache Weise sichergestellt werden kann, dass keine unerwünschten Abbauprodukte (wie nitrose Gase etc.) bei der Herstellung des Dämmstoffes entstehen.

Gemäß einer bevorzugten Ausfuhrungsform enthält der Mediator mindestens ein Material ausgewählt aus der Gruppe enthaltend
- Hydroxybenzoesäure, bevorzugt 4-Hydroxybenzoesäure, sowie deren Ester, bevorzugt Alkyl- und Arylester
- Hydroxyzimtsäure, bevorzugt 4-Hydroxyzimtsäure, sowie deren Ester, bevorzugt Alkyl- und Arylester
- Verbindungen der allgemeinen Struktur III 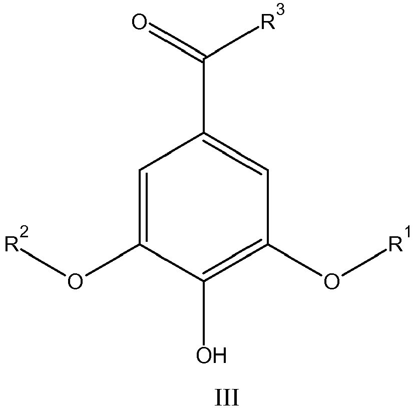 wobei R¹, R² und R³ unabhängig voneinander aus Wasserstoff, Alkyl (bevorzugt Methyl und/oder Ethyl), Cycloalkyl und Aryl ausgewählt sind. Insbesondere bevorzugt sind Acetosyringon (R¹,R²,R³ = Methyl), Syringaldehyd (R¹,R²= Methyl, R³ = H),
- Verbindungen der allgemeinen Struktur IV 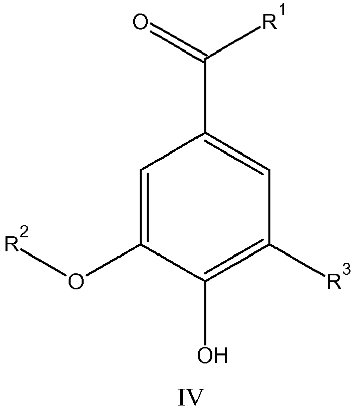 wobei R¹, R² und R³ unabhängig voneinander aus Wasserstoff, Alkyl (bevorzugt Methyl und/oder Ethyl), Cycloalkyl und Aryl ausgewählt sind. Insbesondere bevorzugt sind Acetovanillon (R¹,R²= Methyl, R³ = H), Vanillin (R¹= Methyl, R², R³ = H), Ethylvanillin (R¹= Ethyl, R², R³ = H)
- Verbindungen der allgemeinen Struktur V 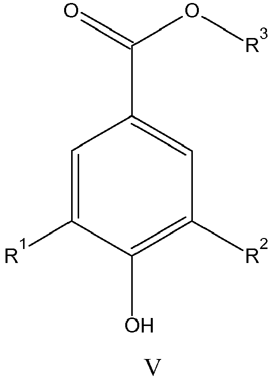 wobei R¹, R² und R³ unabhängig voneinander aus Wasserstoff, Alkoxy (bevorzugt Methoxy und/oder Ethoxy), Alkyl (bevorzugt Methyl und/oder Ethyl), Cycloalkyl und Aryl ausgewählt sind. Insbesondere bevorzugt sind Methylsyringat (R¹,R² = Methoxy, R³ = Methyl), Vanillinsäure (R¹,R³ =H, R² = Methoxy)
- Verbindungen der allgemeinen Struktur VI 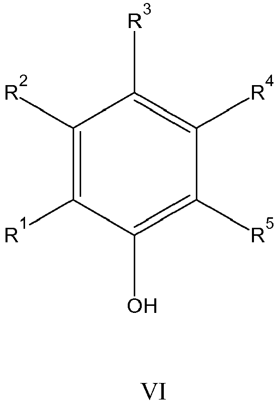 wobei R¹, R², R³, R⁴ und R⁵ unabhängig voneinander aus Wasserstoff, Hydroxy, Alkyl (bevorzugt Methyl und/oder Ethyl), Alkoxy (bevorzugt Methoxy und/oder Ethoxy), Cycloalkyl und Aryl ausgewählt sind. Insbesondere bevorzugt sind 2-6-Dimethylphenol (R¹,R⁵= Methyl, R², R³,R⁴ = H), 2,6-Dimethoxyphenol (R¹,R⁵ = Methoxy, R², R³,R⁴ = H), 3-Methoxyphenol (R² =Methoxy, R¹, R³, R⁴, R⁵=H), 2-Hydroxybiphenyl (R¹ = Phenyl, R², R³, R⁴, R⁵ =H), 3-Hydroxybiphenyl (R² = Phenyl, R¹, R³, R⁴, R⁵=H), 4-Hydroxybiphenyl (R³ = Phenyl, R¹, R², R⁴, R⁵=H), Catechol (R¹ =Hydroxy, R², R³, R⁴, R⁵=H), Guajacol (R¹ =Methoxy, R², R³, R⁴, R⁵=H), 2,4,6-Trimethoxyphenol (R¹,R³, R⁵ =Methoxy, R², R⁴ =H).
- Verbindungen der allgemeinen Struktur VII 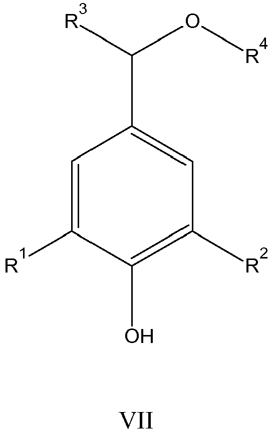 wobei R¹, R², R³ und R⁴ unabhängig voneinander aus Wasserstoff, Alkoxy (bevorzugt Methoxy und/oder Ethoxy), Alkyl (bevorzugt Methyl und/oder Ethyl), Cycloalkyl und Aryl ausgewählt sind. Insbesondere bevorzugt sind Vanillinalkohol (R¹,R³ R⁴ =H, R² = Methoxy)
- Verbindungen der allgemeinen Struktur VIII 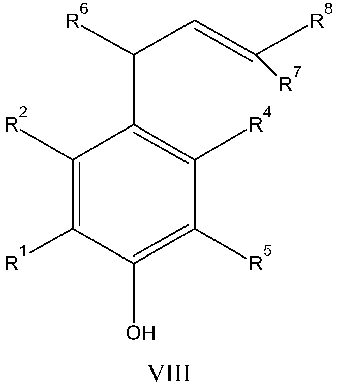 wobei R¹, R², R³, R⁴, R⁵ R⁶, R⁷ und R⁸ unabhängig voneinander aus Wasserstoff, Alkyl (bevorzugt Methyl und/oder Ethyl), Alkoxy (bevorzugt Methoxy und/oder Ethoxy), Cycloalkyl und Aryl ausgewählt sind. Insbesondere bevorzugt sind 2,6-Dimethoxy-4-allylphenol (R¹,R⁵ = Methoxy, R², R³,R⁴, R⁶, R⁷, R⁸ = H), 3-Methoxy-4-allylphenol (R² =Methoxy, R¹, R³, R⁴, R⁵, R⁶, R⁷,R⁸ =H).
- Phenolphtalein, Dichlorindophenol
- Hydroxyanthranylsäure, bevorzugt 3-Hydroxyanthranylsäure und deren Ester, bevorzugt Alkyl und/oder Arylester
- Hydroxybenzylalkohol, bevorzugt 2- und/oder 4-Hydroxybenzylöakohol
oder Mischungen daraus.

### Enzyme

Gemäß einer bevorzugten Ausführungsform der Erfindung ist das phenoloxidierende Enzym, ausgewählt aus der Gruppe Laccasen, Mg-Peroxidasen, Ligninperoxidasen, Ligninasen, Bilirubinoxidasen, Catecholoxidasen oder Mischungen daraus, besonders bevorzugt eine Laccase.

### Inkubationslösung

Die vorstehend genannte Lösung aus Enzym und Mediator wird als Inkubationslösung bezeichnet. Gemäß einer bevorzugten Ausführungsform der Erfindung ist diese Lösung wässrig, insbesondere eine wässrige Lösung mit pH ≤8, noch bevorzugt ≤6.

Gemäß einer bevorzugten Ausführungsform der Erfindung beträgt das Verhältnis zwischen dem Mediator und dem Enzym zwischen ≥0,5 U/ml Enzym pro 1mM Mediator (ggf. die Summe der Mediatoren) bis ≤40 U/ml Enzym pro 1mM Mediator.

Die Aktivität des Enzyms (in Units pro Milliliter U/ml) wird dabei in sog. "ABTS-Units" nach MATSUMURA, E.; YAMAMOTO, E.; NUMATA, A.; KAWANO, T.; SHIN, T.; MURAO, S. (1986): Structures of the Laccase-catalysed Oxidation Products of Hydroxybenzoic Acids in the presence of ABTS. Japan Society for Bioscience, Tiotech. and Agrochem., Agric. Biol. Chem 50 (5), pp. 1355-1357 gemessen.

Dies hat sich in der Praxis besonders bewährt. Besonders bevorzugt beträgt das Verhältnis ≥1 U/ml Enzym pro 1mM Mediator bis ≤30 U/ml Enzym pro 1mM Mediator, noch bevorzugt ≥10 U/ml Enzym pro 1mM Mediator bis ≤20 U/ml Enzym pro 1mM Mediator.

Gemäß einer bevorzugten Ausführungsform der Erfindung wird zumindest Schritt b) und/oder c) unter Zusatz von einem Bindemittel in einer Gew-%-Konzentration von >0 und ≤1% bezogen auf das lignocellulosehaltige Vorläufermaterial durchgeführt. Es hat sich herausgestellt, daß dieser Zusatz bei einigen Anwendungen innerhalb der vorliegenden Erfindung die entstehenden Dämmstoffe nochmals verbessert. Bevorzugte Bindemittel sind isocyanathaltige Bindemittel, diese bevorzugt wiederum ausgewählt aus der Gruppe enthaltend Toluol-2,4-diisocyanat (TDI), Diphenylmethandiisocyanat/ Methylendiphenyldiisocyanat (MDI), Hexamethylendiisocyanat (HMDI), Polymeres Diphenylmethandiisocyanat (PMDI), Isophorondiisocyanat (IPDI), 4,4'-Diisocyanatodicyclohexylmethan (H12MDI) oder Mischungen daraus.

Die vorliegende Erfindung bezieht sich außerdem auf Dämmstoffe, hergestellt nach dem erfindungsgemäßen Verfahren. Gemäß einer bevorzugten Ausführungsform der Erfindung ist der Dämmstoff bindemittelfrei.

Der Ausdruck "bindemittelfrei" im Sinne der vorliegenden Erfindung umfasst dabei insbesondere, dass keine synthetischen oder naturnahe Bindemittel (z. B. Aminoplasten, Phenoplasten, Isocyanate etc., Proteine, Tannine, Stärke etc.) eingesetzt werden und/oder der Anteil dieser Bindemittel am fertigen Dämmstoffe ≤ 1 Gew.-% beträgt. Überraschenderweise hat sich herausgestellt, dass durch die erfindungsgemäße Verwendung bei den meisten Anwendungen auf ein sonstiges Bindemittel (im wesentlichen) verzichtet werden kann. Gemäß einer alternativen aber ebenso bevorzugten Ausführungsform der Erfindung enthält der Dämmstoff Bindemittel und zwar in einer Gew-%-Konzentration von >0 und ≤1% bezogen auf das lignocellulosehaltige Vorläufermaterial. Es hat sich herausgestellt, daß dieser Zusatz (welcher noch unter "bindemittelfrei" im Sinne der obigen Definition zu verstehen ist) bei einigen Anwendungen innerhalb der vorliegenden Erfindung die entstehenden Dämmstoffe nochmals verbessert. Bevorzugte Bindemittel sind isocyanathaltige Bindemittel, diese wiederum bevorzugt ausgewählt aus der Gruppe enthaltend Toluol-2,4-diisocyanat (TDI), Diphenylmethandiisocyanat/ Methylendiphenyldiisocyanat (MDI), Hexamethylendiisocyanat (HMDI), Polymeres Diphenylmethandiisocyanat (PMDI), Isophorondiisocyanat (IPDI), 4,4'-Diisocyanatodicyclohexylmethan (H12MDI) oder Mischungen daraus.

Die erfindungsgemäßen Dämmstoffe können bei einer Vielzahl von Anwendungen eingesetzt werden, insbesondere
- Dämmstoffplatten, z. B. Wärme- und Trittschalldämmplatten
- Dämmstoffe im Baubereich
- Unterdeckplatten
- Türmittellagen für Wohnungs- und Innentüren
- im Hochbau

Die vorgenannten sowie die beanspruchten und in den Ausführungsbeispielen beschriebenen erfindungsgemäß zu verwendenden Bauteile und Komponenten unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Der Begriff "Bindemittel" ist dem Fachmann auf dem Gebiet geläufig; er bezeichnet insbesondere solche Komponenten, die im traditionellen Trockenverfahren oder traditionellem Nassverfahren zugesetzt werden, um die genannten Festigkeitswerte von lignocellulosehaltigen Formkörpern, insbesondere Holzweichfaserplatten, zu verbessern. Typische Bindemittel sind Aminoplasten, Phenolplasten, Isocyanate; ferner Latex und Stärke. Typischerweise wird durch deren Zusatz die Parameter betreffend Festigkeit verbessert. Aus bauphysiologischen Gründen wird es jedoch als vorteilhaft angesehen, wenn der Anteil an Bindemitteln reduziert oder ganz vermieden werden kann. Erfindungsgemäss kann der Anteil an Bindemittel auf ≤ 1 Gew-% reduziert werden; besonders bevorzugt kann auf Bindemittel verzichtet werden. Alternativ wird ein Bindemittel in einem Anteil von >0 und ≤ 1 Gew-% verwendet.

Die Begriffe "Rohdichte" "Druckfestigkeit", "Querzugfestigkeit", "Wärmeleitfähigkeit" sind allgemein bekannt und können nach standardisierten Verfahren gemessen werden. Es ist bekannt, dass die physikalischen Parameter der Festigkeit und der Wärmeleitfähigkeit mit der Dichte des Formkörpers korrelieren. Typischerweise nimmt mit sinkender Dichte die Druck- und Querzugfestigkeit sowie die Wärmeleitfähigkeit ab. Andererseits ist es für viele Anwendungen vorteilhaft, wenn bei geringer Dichte ein niedriger Wärmeleitfähigkeitswert mit hohen Werten für die Druck- und Querzugfestigkeit realisiert werden kann.

Kriterien für Druckfestigkeit, Querzugfestigkeit und Wärmeleitfähigkeit erfüllt:

| | | | | | | |
|---|---|---|---|---|---|---|
| Rohdichtebereich | kg/m3 | 0 - 80 | 80 - 140 | 140 - 210 | 210 - 280 | 280 - 400 |
| Druckfestigkeit | kPa | > 2 | > 20 | > 40 | > 150 | > 200 |
| Querzugfestigkeit | kPa | > 1 | > 10 | > 30 | > 60 | > 100 |

Kriterien für Druckfestigkeit, Querzugfestigkeit und Wärmeleitfähigkeit erfüllt:

| | | | | | | |
|---|---|---|---|---|---|---|
| Rohdichtebereich | kg/m3 | 0 - 80 | 80 - 140 | 140 - 210 | 210 - 280 | 280 - 400 |
| Druckfestigkeit | kPa | >5 | > 30 | > 50 | > 150 | > 200 |
| Querzugfestigkeit | kPa | > 2.5 | > 10 | > 30 | > 60 | > 100 |

Weitere Einzelheiten, Merkmale und Vorteile des Gegenstandes der Erfindung ergeben sich aus den Unteransprüchen sowie aus der nachfolgenden Beschreibung der zugehörigen Beispiele und Zeichnungen, in denen - beispielhaft - mehrere Ausführungsbeispiele erfindungsgemäßer Dämmstoffe dargestellt sind. In den Zeichnungen zeigt:
Fig. 1 ein Fließdiagramm eines Herstellungsverfahrens gemäß der vorliegenden Erfindung nach einem Naßverfahren
Fig. 2 ein Fließdiagramms eines alternativen Herstellungsverfahrens gemäß der vorliegenden Erfindung nach einem Naßverfahren; sowie
Fig. 3 ein Fließdiagramm eines Herstellungsverfahrens gemäß der vorliegenden Erfindung nach einem Trockenverfahren

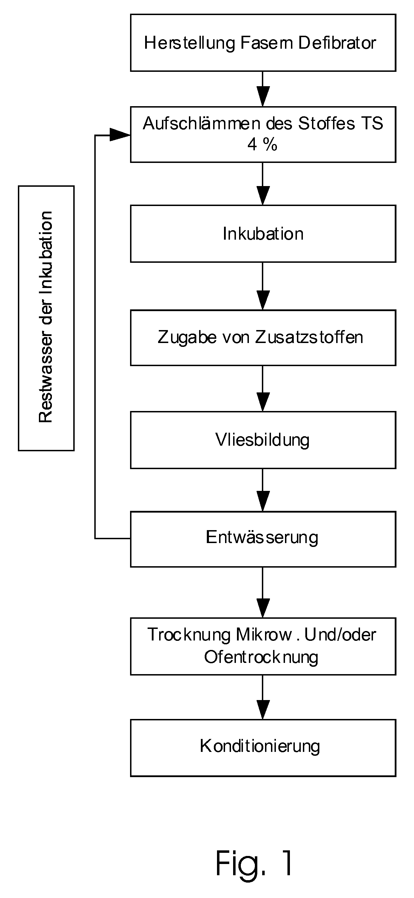

Verfahren nach Fig. 1: Zunächst werden Holzfasern in einem Defibrator hergestellt (1). Anschließend erfolgt eine Aufschlämmung der TMP-Holzfasern in Wasser, welches ggf. einen Puffer enthält, so daß der pH <6 beträgt (2). Dies entspricht der Bereitstellung des "Vorläufermaterials" (Schritt a)

Anschließend wird diese Aufschlämmung mit dem Enzym sowie dem Mediator versetzt ("Inkubation" (3) ). Dies kann bei Raumtemperatur erfolgen, eine Temperierung ist nicht erforderlich. Dies entspricht Schritt b) gemäss vorliegender Beschreibung.

Ggf. kann sich daran die Zugabe von Zusatzstoffen (z.B. Inhibitoren) anschließen (4). Nach Vliesbildung (5) werden, z.B. mit Hilfe eines Gießformkastens, die mit dem Laccase-Mediator-System behandelten TMP-Fasern durch Sogwirkung unter Vakuum entwässert (6). Das dabei erhaltene Restwasser kann wieder zur Aufschlämmung benutzt werden. Nach dem Entwässern wird ggf. das Faservlies einige Sekunden kalt gepresst; dies hat sich besonders bei einer Mikrowellentrocknung als günstig herausgestellt. Anschließend erfolgt die Trocknung der entstandenen Dämmstoffplatte (7); dies kann durch Mikrowelle und/oder Ofentrocknung erfolgen.

Gemäß einer in der Praxis bewährten Vorgehensweise (die insofern eine bevorzugte Ausführungsform der Erfindung darstellt) erfolgt die Trocknung in einer Mikrowelle für ≥ 5 bis ≤ 10 Minuten bei ≥5 mm bis ≤8 Kilowatt. Es hat sich bei vielen Anwendungen und Testversuchen herausgestellt, daß durch die Wärmeeinwirkung der eigentliche Verschmelzung des Mittelamellenlignins auf der TMP-Faseroberfläche statt, wodurch eine feste Verklebung von Faser zu Faser erfolgt. Alternativ ist aber auch eine Trocknung in einem Trockenofen, in einer Conti-Roll-Presse oder Ein- und Mehretagenpresse möglich. Abschließend erfolgt die Konditionierung der dann fertigen Dämmstoffplatte (8). Die Schritte (4) bis (8) werden gemäss vorliegender Beschreibung als "mechanische und/oder thermomechanische Verformung" (Schritt c) zusammengefasst.

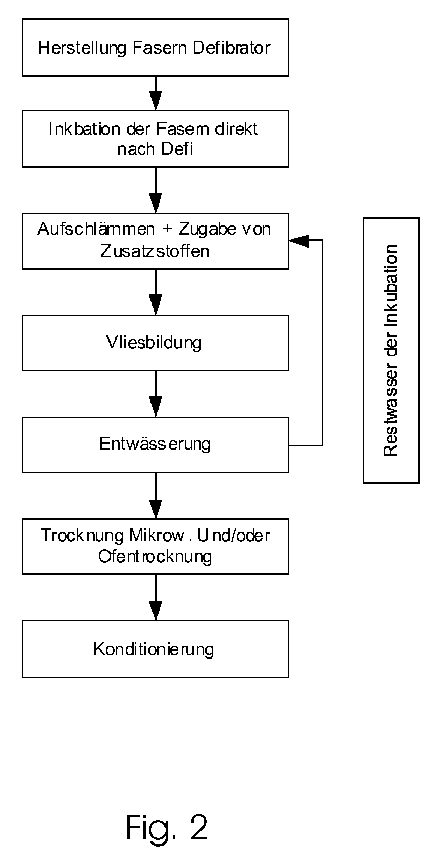

Verfahren nach Fig. 2: Diese Figur zeigt ein alternatives Verfahren zu dem aus Fig. 1; dieses Verfahren unterscheidet sich von dem zuvor beschriebenen dadurch, daß die Fasern vor dem Aufschlämmen inkubiert werden und unmittelbar danach die Aufschlämmung erfolgt. Die restlichen Verfahrensschritte sind analog. Somit wird in (1) ein Vorläufermaterial zur Verfügung gestellt (Schritt a); in (2) erfolgt die Umsetzung gemäss Schritt b); (3) bis (8) entsprechen Schritt c.

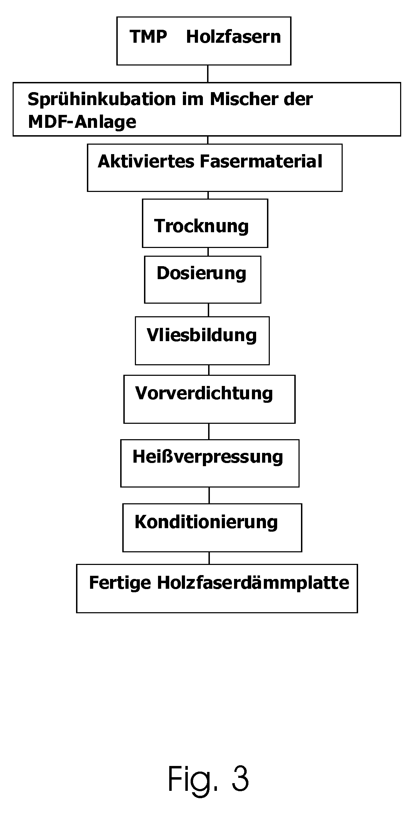

Verfahren nach Fig 3: Zunächst werden die Holzfasern bereitgestellt (1) mittels einer MDF-Anlage bzw. einer normalen Beleimungsanlage mit dem Mediator/Enzymgemisch besprüht (Blender- oder Blowlineverfahren). Die so erhaltenen aktivierten Fasern werden anschließend getrocknet, bevorzugt in einer Rohrtrocknungsanlage mit 60 °C - 120 °C (Eingangstemperatur) auf ca. 10 % - 15 % Feuchte. Danach erfolgt die maschinelle Bildung des Faservlieses, bevorzugt mittels Austrags- und Steuwalzen. Das so entstandene Faservließ wird (je nach Anwendung einige Sekunden) kalt vorverdichtet und anschließend heiß verpreßt. Alternativ kann auch eine Trocknung z.B. in der Mikrowelle oder in einem Trockenofen, in einer Conti-Roll-Presse, Dampf- und Dampf-Luft-Gemisch Durchströmung oder Ein- und Mehretagenpresse stattfinden. In der Praxis wurde oftmals gefunden, dass bei diesen Trocknungsvorgängen durch die Wärmeeinwirkung die eigentliche Verschmelzung des Mittelamellenlignins auf der TMP-Faseroberfläche stattfindet, wodurch eine feste Verklebung von Faser zu Faser erfolgt.

### Beispiel I:

Herstellung einer Dämmstoffplatte mit einer Rohdichte von 200 kg/m³ und 20 mm Plattendicke im Trockenverfahren

Hierzu wurde ein Mediator sowie handelsübliche Laccase als Enzym verwendet und aus Holzfasern (TMP-Fasern, bestehend aus Kiefernholz mit einer Länge von 1,23 mm bis 5,12 mm und einem Faserdurchmesser von 0,11 mm bis 0,87 mm) eine Dämmstoffplatte nach folgendem Verfahren hergestellt:
Es wurde ein Puffergemisch auf 200 U/ml Laccase und 10 mM Mediator eingestellt.

Anschließend wurden die Holzfasern mit der Laccase-Mediatorlösung im Einachs-Mischer (Blender-Verfahren) besprüht. Es handelt sich um ein Sprühverfahren, welches im herkömmlichen Sinne als Trockenverfahren bekannt ist. Es wurden üblicherweise 1 Liter Lösung auf 1 kg Holzfasern verwendet.

Die Holzfasern wurden nach dem Besprühen mit Laccase-Mediator Puffergemisch unmittelbar durch die Rohrtrocknungsanlage auf 14 % Feuchte getrocknet. Die Trocknereingangstemperatur betrug dabei 90 °C, die Trocknerausgangstemperatur 40 °C. Nach der Trocknung erfolgte das Streuen zum Faservlies, das Vorverdichten und Verpressen in einer Einetagenpresse mit 20 mm starken Distanzleisten zu Dämmplatten. Die Presstemperatur betrug 190 °C, die Presszeit 15 Sekunden pro Millimeter Plattendicke.

Alle hergestellten Dämmplatten wurden nach einer Abkühlphase (mindestens 4 Stunden) besäumt, um nach den mechanisch-technologischen Eigenschaftstest nach den gültigen EN-Normen für Dämmstoffe überprüft zu werden.

### Beispiel II:

Herstellung einer Dämmstoffplatte mit einer Rohdichte von 200 kg/m³ und 20 mm Plattendicke im Nassverfahren

Zur Herstellung der enzymatisch gebundenen Dämmplatten nach dem Nassverfahren werden im Reaktor 500 g Holzfasern mit einer 25 1 Pufferlösung versetzt. Die Pufferlösung besteht aus McIlvaine Puffer (pH 6,0) und einer Laccase-Mediatorkonzentration. Somit beträgt die Stoffkonzentration 2 %. Ein Rührwerk durchmischt die Lösung die gesamte Zeit.

Nach dem Aufschlemmen erfolgt das Überführen der Suspension zur Vliesbildung in eine Gießform wo die Fasern aufgefangen durch ein Sieb durch Sogwirkung entwässert werden. Die Dämmplattenlänge und -breite beträgt 500 mm x 300 mm. Anschließend wird das Faservlies aus dem Gießkasten entnommen und für einige Sekunden zur zusätzlichen Entwässerung kalt gepresst. Es erfolgt eine 10-minütige Mikrowellentrocknung bei 1850 Watt.

Die Dämmplatten werden in Probenkörper zugeschnitten, die zur Bestimmung der Platteneigenschaften Rohdichte, Wasseraufnahme, Dickenquellung, Querzugfestigkeit und Ausgleichsfeuchte (Gleichgewichtsfeuchte) dienen. Die Probenkörper werden anschließend bei 20 °C und 65 % relativer Luftfeuchte mehrere Tage konditioniert.

Geprüft werden die Platten auf ihre Querzugfestigkeit in Anlehnung an EN 1607 (1996) und auf ihre Dickenquellung in Anlehnung an EN 317 (2003). Die Bestimmung ihrer Dichte erfolgt nach der EN 1602 (1997), die Bestimmung der Wasseraufnahme bei kurzzeitigem teilweisen Eintauchen nach der EN 1609 (1997).

### Beispiel III: Herstellung von Holzfaserdämmstoffplatten unter Zusatz von Isocyanat-Bindemittel

Zusätzlich wurden Versuche unternommen, um den Einfluß von kleineren Mengen (bis zu 1% auf 1 Kg Holzfasern) Isocyanat-Bindemittel auf die Eigenschaften der Holzfaserdämmstoffplatten zu untersuchen.

In der nachstehenden Tabelle ist eine Aufstellung der mechanisch-technologischen Eigenschaften von im Labormaßstab hergestellten, Laccase-Mediator-System gebundener Holzfaserdämmstoffplatten mit einer Rohdichte von unterhalb 230 kg/m³ aufgelistet

**Tabelle 1**

| Eigenschaftstest | Bindemittelsystem | Plattendicke [mm] | |
|---|---|---|---|
| | | 20 | 40 |
| Zugfestigkeit [kPA] (EN 1607) | LMS | 15 | 10 |
| | 1 % PMDI | 13 | 8 |
| | LMS + 0,2 % PMDI | 27 | 19 |
| | LMS + 0,5 % PMDI | 35 | 25 |
| | LMS + 1% PMDI | 40 | 31 |
| Biegefestigkeit [N/mm²] (EN 12089) | LMS | 0,7 | 0,4 |
| | 1 % PMDI | 0,8 | 0,6 |
| | LMS + 0,2 % PMDI | 1,2 | 0,8 |
| | LMS + 0,5 % PMDI | 1,4 | 1 |
| | LMS + 1 % PMDI | 1,5 | 1,2 |
| Wasseraufnahme nach 24 h [kg/m²] (EN 1609) | LMS | 2 | 2,6 |
| | 1 % PMDI | 1,9 | 2,0 |
| | LMS + 0,2 % PMDI | 1,6 | 2,0 |
| | LMS + 0,5 % PMDI | 1,1 | 1,7 |
| | LMS + 1 % PMDI | 1,0 | 1,5 |

Dabei wurden folgende Versuchsparameter verwendet bzw. eingestellt:
Rohdichte 200 kg/m³, 20 mm und 40 mm stark,
Laccasekonzentration: 10 U/ml, Mediator Hydroxybenzoesäure: 10 mM,
Hydrophobierungsmittel: Sasol Wax 46
bei Verwendung von PMDI: Huntsmann I-Bond 4730 (in der 2. Stufe aufgetragen),
Verpressung: Heißpresse bei 200 °C , Presszeiten: 9 s/mm (20 mm und 40 mm Dicke)

Bei der Herstellung der Holzfaserdämmstoffe unterhalb einer Rohdichte von 230 kg/m³ hat sich gezeigt, dass eine Ergänzung des Laccase-Mediator-Systems durch PMDI bis zu 1 Gew.-% auf 1 kg Holzfasern eine deutliche Verbesserung der mechanisch-technologischen Eigenschaftswerte ergibt (siehe Tabelle 1). Je nach Anwendungsgebiet für den Dämmstoff, können somit zur Stabilitätserhöhung PMDI-Leime hinzugegeben werden.

Es können sowohl emulgierbare Isocyanate direkt mit dem Laccase-Mediator-System in Suspension gebracht werden (1-stufige Beleimung), oder auch in einzelnen Schritten, wobei zunächst das Laccase-Mediator-System auf die Fasern aufgetragen wird und dann das Isocyanat (emulgierbares oder nicht emulgierbares) (2-stufig oder mehrstufig). Die Aushärtung der Dämmstoffplatten kann dabei durch jegliche Techniken, wie Heißpressung, Konvektionstrocknung, Dampf- und Dampf-Luft-Gemisch Durchströmung erfolgen.

## Patentansprüche

1. Verfahren zur Herstellung von lignocellulosehaltigen Dämmstoffen, umfassend die Schritte:
a) Bereitstellung eines lignocellulosehaltigen Vorläufermaterials;
b) Versetzen dieses Vorläufermaterials mit einer Inkubationslösung, enthaltend mindestens einen Mediator und mindestens ein phenoloxidierendes Enzym bei einem pH von ≤8, bevorzugt bei einem pH von ≤6;
c) nach einer Inkubationszeit von <30 min mechanische und/oder thermomechanische Verformung;
d) gegenbenenfalls sofortige Konfektionierung.
und wobei der Mediator ein Material lt Struktur I enthält bzw. daraus besteht: 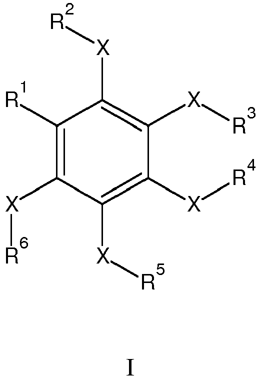 wobei
R¹ ausgewählt ist aus Hydroxyl (-OH) und Thiol (-SH);
jedes X unabhängig voneinander ausgewählt ist aus der Gruppe enthaltend Einfachbindung, -CR'R"-, -CR'=CR"-, wobei R' und R" unabhängig voneinander ausgewählt sind aus der Gruppe enthaltend Wasserstoff, Alkyl, Aryl, Cycloalkyl,
sowie
R² bis R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH-Gruppen unabhängig voneinander durch -O-, -S-, -NH-, -NR°-, -SiR°R°°-, -CO-,-COO-, -OCO-, -OCO-O-, -SO₂-, -S-CO-, -CO-S-, -CY¹=CY² oder -C≡C- ersetzt sein können und zwar derart, dass O und/oder S Atome nicht direkt miteinander verbunden sind (endständige CH₃-Gruppen werden wie CH₂-Gruppen im Sinne von CH₂-H verstanden),
und wobei mindestens ein Rest R² bis R⁶ ausgewählt ist aus der Gruppe Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon;

2. Verfahren nach Anspruch 1, wobei der Mediator ein Material mit der folgenden Struktur II umfasst: 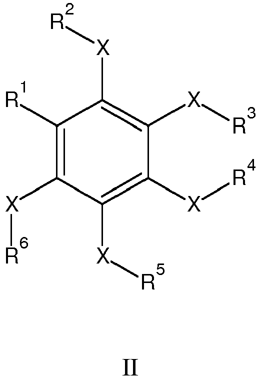 wobei
R¹ ausgewählt ist aus Hydroxyl (-OH) und Thiol (-SH);
R⁴ ausgewählt ist aus der Gruppe enthaltend Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon;
jedes X unabhängig voneinander ausgewählt ist aus der Gruppe enthaltend Einfachbindung, -CR'R"-, -CR'=CR"-, wobei R'und R"unabhängig voneinander ausgewählt sind aus der Gruppe enthaltend Wasserstoff, Alkyl, Aryl, Cycloalkyl,
sowie
R² , R³ R⁵ und R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH-Gruppen unabhängig voneinander durch -O-, -S-, -NH-, -NR°-, -SiR°R°°-, -CO-,-COO-, -OCO-, -OCO-O-, -SO₂-, -S-CO-, -CO-S-, -CY¹=CY² oder -C≡C- ersetzt sein können und zwar derart, dass O und/oder S Atome nicht direkt miteinander verbunden sind (endständige CH₃-Gruppen werden wie CH₂-Gruppen im Sinne von CH₂-H verstanden),

3. Verfahren nach Anspruch 1 oder 2, wobei der Mediator 4-Hydroxybenzoesäure enthält oder daraus besteht.

4. Verfahren nach einem der Ansprüche 1 bis 3, wobei das phenoloxidierende Enzym, ausgewählt ist aus der Gruppe Laccasen, Mg-Peroxidasen, Ligninperoxidasen, Ligninasen, Bilirubinoxidasen, Catecholoxidasen oder Mischungen daraus

5. Verfahren nach einem der Ansprüche 1 bis 4, wobei das Verhältnis zwischen dem Mediator und dem Enzym ≥0,5 U/ml Enzym pro 1mM Mediator bis ≤40 U/ml Enzym pro 1mM Mediator beträgt.

6. Verfahren nach einem der Ansprüche 1 bis 5, wobei in Schritt a) die Konzentration (in U/ml) des mindestens einen Enzyms ≥50 U/ml bis ≤400 U/ml beträgt.

7. Verfahren nach einem der Ansprüche 1 bis 6, wobei entweder
▪ vor Schritt a) und/oder b) eine Aufschlämmung in Wasser und/oder einem Wasser-Puffergemisch erfolgt ("Nassverfahren") oder
▪ Schritt b) durch Besprühen von trockenem Vorläufermaterial erfolgt (Trockenverfahren).

8. Verfahren nach einem der Ansprüche 1 bis 7, wobei zumindest Schritt b) und/oder c) unter Zusatz von einem Bindemittel in einer Gew-%-Konzentration von >0 und ≤1% bezogen auf das lignocellulosehaltige Vorläufermaterial durchgeführt wird.

9. Verwendung eines Dämmstoffes, hergestellt nach dem Verfahren gemäß einem der Ansprüche 1 bis 8
- im Hochbau
- Dämmstoffplatten, z. B. Wärme- und Trittschalldämmplatten
- Dämmstoffe im Baubereich
- Unterdeckplatten
- Türmittellagen für Wohnungs- und Innentüren

## Claims

1. Method for producing lignocellulose-containing insulating materials, comprising the steps of:
a) providing a lignocellulose-containing precursor material;
b) adding an incubation solution to this precursor material, wherein the incubation solution comprises at least one mediator and at least one phenol oxidising enzyme at a pH-value of ≤ 8, preferably at a pH-value of ≤ 6;
c) mechanical and/or thermomechanical deformation after an incubation time of < 30 min;
d) optionally immediate finishing,
wherein the mediator comprises a material according to structure I or consists thereof: 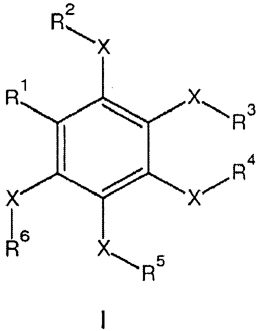 wherein
R¹ is selected from hydroxyl (-OH) and thiol (-SH);
each X is independently selected from the group consisting of single bond, -CR'R"-, -CR'=CR"-, wherein R' and R"are independently selected from the group consisting of hydrogen, alkyl, aryl, cycloalkyl, and
R² to R⁶ are independently selected from the group consisting of hydrogen, hydroxyl, thiol, halogen, pseudohalogen, formyl, carboxy- and/or carbonyl derivatives, alkyl, long-chain alkyl, alkoxy, long-chain alkoxy, cycloalkyl, halogen alkyl, aryl, arylenes, halogen aryl, heteroaryl, heteroarylenes, heterocycloalkylenes, heterocycloalkyl, halogene heteroaryl, alkenyl, halogene alkenyl, alkynyl, halogen alkynyl, keto, ketoaryl, halogen ketoaryl, ketoheteroaryl, ketoalkyl, halogen ketoalkyl, ketoalkenyl, halogen ketoalkenyl, phosphoalkyl, phosphonates, phosphates, phosphine, phosphine oxide, phosphoryl, phosphoaryl, sulphonyl, sulphoalkyl, sulphoarenyl, sulphonates, sulphates, sulphones, polyether, silylalkyl, silylalkyloxy, wherein for suitable residues one or more non-adjacent CH₂ groups independently can be substituted by -O-, -S-, -NH-, -NR°-, -SiR°R°°-, -CO-,-COO-, -OCO-, -OCO-O-, -SO₂-, -S-CO-, -CO-S-, -CY¹=CY² or -C=C- in such a manner that O and/or S atoms are not directly bond to each other (terminal CH₃ groups are understood as CH₂ groups in the sense of CH₂-H), and
wherein at least one residue R² to R⁶ is selected from the group consisting of alkoxy, formyl, carboxy and/or carbonyl derivatives, keto, ketoaryl, halogen ketoaryl, ketoheteroaryl, ketoalkyl, halogen ketoalkyl, ketoalkenyl, halogen ketoalkenyl, sulphonyl, sulphoalkyl, sulphoarenyl, sulphonates, sulphates, sulphone.

2. Method according to claim 1, wherein the mediator comprises a material having the following structure II: 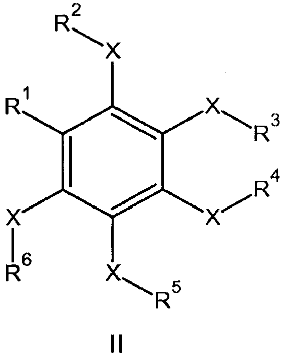 wherein
R¹ is selected from hydroxyl (-OH) and thiol (-SH);
R⁴ is selected from the group consisting of alkoxy, formyl, carboxyl and/or carbonyl derivatives, keto, ketoaryl, halogen ketoaryl, ketoheteroaryl, ketoalkyl, halogen ketoalkyl, ketoalkenyl, halogen ketoalkenyl, sulphonyl, sulphoalkyl, sulphoarenyl, sulphonates, sulphates, sulphone;
each X is independently selected from the group consisting of single bond, -CR'R"-, -CR'=CR"-, wherein R' and R" are independently selected from the group consisting of hydrogen, alkyl, aryl, cycloalkyl, and
R², R³, R⁵ and R⁶ are independently selected from the group consisting of hydrogen, hydroxyl, thiol, halogen, pseudohalogen, formyl, carboxyand/or carbonyl derivatives, alkyl, long-chain alkyl, alkoxy, long-chain alkoxy, cycloalkyl, halogen alkyl, aryl, arylenes, halogen aryl, heteroaryl, heteroarylenes, heterocycloalkylenes, heterocycloalkyl, halogen heteroaryl, alkenyl, halogen alkenyl, alkynyl, halogen alkynyl, keto, ketoaryl, halogen ketoaryl, ketoheteroaryl, ketoalkyl, halogen ketoalkyl, ketoalkenyl, halogen ketoalkenyl, phosphoalkyl, phosphonates, phosphates, phosphine, phosphine oxide, phosphoryl, phosphoaryl, sulphonyl, sulphoalkyl, sulphoarenyl, sulphonates, sulphates, sulphones, polyether, silylalkyl, silylalkyloxy, wherein for suitable residues one or more non-adjacent CH₂ groups can independently be substituted by -O-, -S-, -NH-, -NR°-, -SiR°R°°-, -CO-,-COO-, -OCO-, -OCO-O-, -SO₂-, -S-CO-, -CO-S-, -CY=CY² or -C=C- in such a manner that O and/or S atoms are not directly bond to each other (terminal CH₃ groups are understood as CH₃ groups in the sense of CH₂-H).

3. Method according to claim 1 or 2, wherein the mediator includes 4-hydroxybenzoic acid or consists thereof.

4. Method according to any one of claims 1 to 3, wherein the phenol oxidising enzyme is selected from the group consisting of laccases, Mg peroxidases, lignin peroxidases, ligninases, bilirubin oxidases, catechol oxidases or mixtures thereof.

5. Method according to any one of claims 1 to 4, wherein the ratio between the mediator and the enzyme is ≥ 0.5 U/ml enzyme per 1 mM mediator to < 40 U/ml enzyme per 1 mM mediator.

6. Method according to any one of claims 1 to 5, wherein in step a) the concentration (in U/ml) of the at least one enzyme is ≥ 50 U/ml to ≤ 400 U/ml.

7. Method according to any one of claims 1 to 6, wherein either
▪ prior to step a) and/or b) a suspension in water and/or in a water buffer mixture is carried out ("wet process"); or
▪ step b) is carried out by spraying dry precursor material (dry process").

8. Method according to any one of claims 1 to 7, wherein at least step b) and/or c) are carried out with the addition of a binder in a wt.-% concentration of > 0 and ≤ 1% with respect to the lignocellulose-containing precursor material.

9. Use of an insulating material produced by the method according to any one of claims 1 to 8 in
- construction work;
- insulation boards, such as thermal and sound insulation boards;
- insulating materials in the construction sector;
- sarking panels;
- door cores for housing and interior doors.

## Revendications

1. Procédé pour la production de matériaux isolants contenant de la lignocellulose, comprenant les étapes de :
a) fourniture d'un matériau précurseur contenant de la lignocellulose ;
b) ajout de ce matériau précurseur avec une solution d'incubation contenant au moins un médiateur et au moins une enzyme d'oxydation de phénol à un pH de ≤ 8, de préférence à un pH de ≤ 6 ;
c) après un temps d'incubation de < 30 min, déformation mécanique et/ou thermomécanique ;
d) éventuellement, conditionnement immédiat.
et dans lequel le médiateur comprend ou se compose d'un matériau selon la structure I : 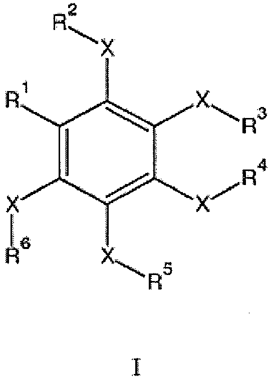 dans lequel
R¹ est choisi parmi un hydroxyle (-OH) et un thiol (-SH) ;
chaque X est indépendamment choisi dans le groupe contenant une liaison simple, -CR'R"-, - CR'=CR"-, où R' et R" sont indépendamment choisis dans le groupe comprenant un hydrogène, un alkyle, un aryle, un cycloalkyle,
ainsi que
R² à R⁶ sont indépendamment choisis dans le groupe comprenant un hydrogène, un hydroxyle, un thiol, un halogène, un pseudohalogène, un formyle, un carboxy- et/ou un dérivé carbonyle, un alkyle, un alkyle à longue chaîne, un alcoxy, un alcoxy à longue chaîne, un cycloalkyle, un halogénoalkyle, un aryle, un arylène, un halogénoaryle, un hétéroaryle, un hétéroarylène, un hétérocycloalkylène, un hétérocycloalkyle, un halohétéroaryle, un alcényle, un haloalcényle, un alcynyle, un haloalcynyle, un céto, un cétoaryle, un halocétoaryle, un cétohétéroaryle, un cétoalkyle, un halocétoalkyle, un cétoalcényle, un halocétoalcényle, un phosphoalkyle, un phosphonate, un phosphate, une phosphine, un oxyde de phosphine, un phosphoryle, un phosphoaryle, un sulfonyle, un sulfoalkyle, un sulfoarényle, un sulfonate, un sulfate, une sulfone, un polyéther, un silylalkyle, un silylalcoxy, dans lequel un ou plusieurs des groupes CH₂ non adjacents appropriés peuvent être indépendamment substitués par -O-, - S-, -NH-, -NR°-, -SiR°R°°-, -CO-, -COO-, -OCO-, -OCO-O-, -SO₂-, -S-CO-, -CO-S-, - CY₁=CY₂ ou -C ≡C-, notamment de sorte que les atomes de O et/ou S ne soient pas directement reliés les uns aux autres (les groupes CH₃ terminaux étant entendus comme des groupes CH₂ au sens de groupes CH₂-H),
et dans lequel au moins un radical R² à R⁶ est choisi parmi un groupe alcoxy, formyle, carboxy- et/ou dérivés de carbonyle, céto, cétoaryle, halocétoaryle, cétohétéroaryle, cétoalkyle, halocétoalkyle, cétoalcényle, halocétoalcényle, sulfonyle, sulfoalkyle, sulfooarényle, sulfonate, sulfate, sulfone ;

2. Procédé selon la revendication 1, dans lequel le médiateur comprend un matériau ayant la structure II suivante : 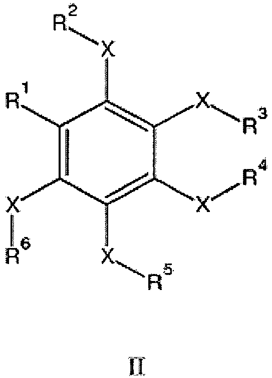 dans lequel
R¹ est choisi parmi un hydroxyle (-OH) et un thiol (-SH) ;
R⁴ est choisi dans le groupe constitué par un groupe alcoxy, formyle, carboxy et/ou dérivés de carbonyle, céto, cétoaryle, halocétoaryle, cétohétéroaryle, cétoalkyle, halocétoalkyle, cétoalcényle, halocétoalcényle, sulfonyle, sulfoalkyle, sulfoarenyle, sulfonate, sulfate, sulfone ,
chaque X est indépendamment choisi dans le groupe contenant une liaison simple, -CR'R"-,-CR'=CR"-, où R' et R" sont indépendamment choisis dans le groupe comprenant un hydrogène, un alkyle, un aryle, un cycloalkyle,
ainsi que
R², R³, R⁵ et R⁶ sont indépendamment choisis dans le groupe contenant un hydrogène, un hydroxyle, un thiol, un halogène, un pseudohalogène, un formyle, un carboxy- et/ou un dérivé carbonyle, un alkyle, un alkyle à longue chaîne, un alcoxy, un alcoxy à longue chaîne, un cycloalkyle, un halogénoalkyle, un aryle, un arylène, un halogénoaryle, un hétéroaryle, un hétéroarylène, un hétérocycloalkylène, un hétérocycloalkyle, un halohétéroaryle, un alcényle, un haloalcényle, un alcynyle, un haloalcynyle, un céto, un cétoaryle, un halocétoaryle, un cétohétéroaryle, un cétoalkyle, un halocétoalkyle, un cétoalcényle, un halocétoalcényle, un phosphoalkyle, un phosphonate, un phosphate, une phosphine, un oxyde de phosphine, un phosphoryle, un phosphoaryle, un sulfonyle, un sulfoalkyle, un sulfoarényle, un sulfonate, un sulfate, une sulfone, un polyéther, un silylalkyle, un silylalcoxy, dans lequel un ou plusieurs des groupes CH₂ non adjacents appropriés peuvent être indépendamment substitués par -O-,-S-, -NH-, -NR°-, -SiR°R°°-, -CO-, -COO-, -OCO-, -OCO-O-, -SO₂-, -S-CO-, -CO-S-,-CY₁=CY₂ ou -C =C-, notamment de sorte que les atomes de O et/ou S ne soient pas directement reliés les uns aux autres (les groupes CH₃ terminaux étant entendus comme des groupes CH₂ au sens de groupes CH₂-H),

3. Procédé selon la revendication 1 ou la revendication 2, dans lequel le médiateur contient ou est constitué d'acide 4-hydroxybenzoïque.

4. Procédé selon l'une des revendications 1 à 3, dans lequel ladite enzyme d'oxydation de phénol est choisie parmi les laccases, les Mg-peroxydases, les peroxydases de lignine, les ligninases, les oxydases de bilirubine, les oxydases de catéchol ou leurs mélanges

5. Procédé selon l'une des revendications 1 à 4, dans lequel le rapport entre le médiateur et l'enzyme est ≥ 0,5 U/ml d'enzyme par 1 mM de médiateur à ≤ 40 U/ml d'enzyme par 1 mM de médiateur.

6. Procédé selon l'une des revendications 1 à 5, dans lequel dans l'étape a) la concentration (en U/ml) d'au moins une enzyme est ≥ 50 U/ml à ≤ 400 U/ml.

7. Procédé selon l'une des revendications 1 à 6, dans lequel soit
• avant l'étape a) et/ou b) une suspension dans l'eau et/ou un mélange eau-tampon est effectuée (« voie humide ») ou
• l'étape b) est effectuée par pulvérisation de matériau précurseur sec (voie sèche).

8. Procédé selon l'une des revendications 1 à 7, dans lequel au moins l'étape b) et/ou c) est effectuée sous addition de liant dans une concentration en pourcentage massique de > 0 et ≤ 1% par rapport au matériau précurseur contenant de la lignocellulose.

9. Utilisation d'un matériau isolant, réalisé par le procédé selon l'une quelconque des revendications 1 à 8 pour
- des travaux dans le bâtiment
- des panneaux de matériaux isolants, par exemple des panneaux d'isolation thermique et acoustique
- des matériaux isolants dans le secteur de la construction
- des panneaux de sous-couverture
- des âmes de porte pour des portes de logement et d'intérieur
